Europäisches Patentamt

European Patent Office

Office européen des brevets

(19)

(11) Veröffentlichungsnummer: **0 163 252**
**B1**

(12) **EUROPÄISCHE PATENTSCHRIFT**

(45) Veröffentlichungstag der Patentschrift:
31.01.90

(21) Anmeldenummer: 85106286.9

(22) Anmeldetag: 22.05.85

(51) Int. Cl.⁴: **F 16 L 19/03,** F 16 L 19/06,
F 16 L 15/00

(54) **Rohrverschraubung mit Berührungsdichtung.**

(30) Priorität: 29.05.84 DE 3419999

(43) Veröffentlichungstag der Anmeldung:
04.12.85 Patentblatt 85/49

(45) Bekanntmachung des Hinweises auf die Patenterteilung:
31.01.90 Patentblatt 90/5

(84) Benannte Vertragsstaaten:
AT CH DE FR GB IT LI NL

(56) Entgegenhaltungen:
DE-A- 2 554 827
DE-B- 1 927 153
GB-A- 2 070 708
US-A- 4 068 863

(73) Patentinhaber: Hehl, Karl, Arthur-Hehl-Strasse 32,
D-7298 Lossburg 1 (DE)

(72) Erfinder: Hehl, Karl, Arthur-Hehl-Strasse 32,
D-7298 Lossburg 1 (DE)

(74) Vertreter: Mayer, Friedrich, Dr. et al, Patentanwälte Dr.
Mayer & Frank Westliche 24, D-7530 Pforzheim (DE)

ACTORUM AG

## Beschreibung

Die Erfindung bezieht sich auf eine mit Hilfe von Rohranschlußteilen herstellbare Rohrverschraubung mit ausschließlicher Berührungsdichtung an ruhenden Flächen an einer hydraulischen Leitung für ein unter Überdruck stehenden Flüssigkeit, mit wenigstens einem elastischen Dichtring, der in einem von einem Mantelabschnitt des Rohres und anderen Rohranschlußteilen begrenzten Ringraum der Rohrverschraubung angeordnet und mittels eines hülsenförmigen Schraubelementes (Preßteil) in Dichtposition überführbar ist, wobei das Preßteil mit dem Rohr mittels eines ringförmigen Abstützteiles für die Preßbewegung zu einer Bewegungseinheit verbunden ist und die mit Berührungsflächen aneinandergefügte Teile der Rohrverschraubung einen bei beendeter Preßbewegung des Preßteiles geschlossenen Ringraum begrenzen, dessen Rauminhalt dem Volumen des aus einem elastischen, hochpolymerem Werkstoff bestehenden und durch die Preßbewegung deformierten Dichtringes entspricht, der annäherungsweise über seine gesamte Oberfläche mit annäherungsweise gleichem Anpreßdruck an der inneren Oberfläche des Ringraumes anliegt.

Eine bekannte Überdruck-Rohrverschraubung dieser Art (DE-PS 363 983; US-PS 3 615 109) gewährleistet eine gute Dichtung, ist im Bedarfsfalle lösbar und – gegebenenfalls nach Austausch des Dichtringes – ohne Beeinträchtigung der Dichtqualität wieder verwendbar. Diese Vorzüge sind jedoch nur aufgrund der verwendungsspezifischen, daher für jeden Zweck unterschiedlichen Gestaltung der zu verbindenden Teile erreichbar.

Mit einer bekannten Überdruck-Rohrverschraubung vergleichbarer Art (Ermeto Armaturen GmbH, Am Metallwerk 9, D-4800 Bielefeld 12, Nr. 54–4/81) können Rohrenden miteinander in einer Weise verbunden werden, die allen Ansprüchen an Dichtigkeit und Axialsicherung genügt. Hierbei findet jedoch ein metallener Dichtring Verwendung, der mit zur Rohrachse geneigten Ringkanten in die Wandung des umschlossenen Rohres eingedrückt wird. Aus diesem Grunde ist eine Wiederherstellung der Rohrverschraubung nach Lösen nicht ohne wesentliche Verminderung der Qualität der Dichtung möglich.

Mit einer bekannten Überdruck-Rohrverbindung vergleichbarer Art (DE-U 1 535 786) ist es zwar möglich, normale Rohre zu verbinden und nach Lösung ohne Beeinträchtigung der Dichtqualität wieder zu verwenden. Diese Rohrverbindung vermag jedoch extrem hohen Ansprüchen an Dichtigkeit nicht zu genügen, weil das aus Kupfer bzw. Leder bestehende Dichtmittel zwischen den kongruenten Stirnkanten der Rohrenden angeordnet ist. Zur axialen Sicherung der Rohrenden wird eine als Preßorgan dienende Hohlschraube mittels eines Rundringes mit dem von ihm umschlossenen Rohrende zu einer Bewegungseinheit gekuppelt.

Schließlich ist eine für Unterdruckbedingungen konzipierte Rohrverschraubung bekannt (GB-A 904 566), bei welcher der Ringraum vom Mantel der zu verbindenden Rohrenden und von der Stirnkante der als Preßorgan dienenden Hohlschraube begrenzt ist. Die Preßbewegung wird durch eine eine Widerlagermuffe hintergreifende Überwurfmutter erzeugt, um eine Reibbeanspruchung des Dichtringes durch das sich drehende Preßorgan zu vermeiden.

Nicht zuletzt ist darauf hinzuweisen, daß bei einer bekannten Rohrverschraubung (US-A 4 068 863) in eine Ringnut des in die Rohrverschraubung einzubindenden Rohrendes eine Ringnut eingebracht ist, in der ein Kupplungsring abgestützt ist. Der Kupplungsring liegt rückseitig an der Preßkante einer Hohlschraube an und wirkt bei der Preßbewegung der Hohlschraube unmittelbar auf einen Dichtring ein, der in einem nicht geschlossenen Dichtraum angeordnet ist. Eine solche Rohrverschraubung ist für Überdruckbedingungen weder bestimmt noch geeignet. Auch ist nicht erkennbar, wie gleiche Rohrenden miteinander verbunden werden können.

Der Erfindung liegt die Aufgabe zugrune, eine Rohrverschraubung der eingangs genannten Gattung derart weiterzubilden, daß aus einem verhältnismäßig begrenzten Sortiment von Rohranschlußteilen (Hohlschrauben, Überwurfmuttern, Rundringen, Armierungsringen) Rohr-Block-Verbindungen und Rohr-Rohr-Verbindungen je mit hoher Anpassungsfähigkeit an unterschiedliche Überdruckbedingungen verwirklicht und beliebig oft voneinander gelöst werden können, wobei zur Rationalisierung der Fertigung zum Teil gleiche Bauteile verwendbar sind.

Diese Aufgabe wird erfindungsgemäß dadurch gelöst, daß der Dichtring mittels einer das angekuppelte Rohr bei Preßbewegung mitführenden Hohlschraube in Dichtposition überführbar ist, wobei die Preßschulter der Hohlschraube mit einem Armierungsring versehen ist, der mit seinem inneren Umang auf der Mantelfläche des Rohres gelagert ist und der bei Preßbewegung mit seinem äußeren Umfang an einer zur Mantelfläche des Rohres parallelen inneren Mantelfläche der Rohrverschraubung gleitbar anliegt, und daß die Hohlschraube mit dem Rohr mittels eines gehärteten Rundringes für die Preßbewegung zu einer Bewegungseinheit gekuppelt ist, der etwa hälftig in einer geprägten Ringnut des Rohres von entsprechendem Radius aufgenommen und an der Preßkante im Bereich einer ringförmigen Anlagefläche anliegt, die sich in einem Abstand von dem Armierungsring befindet, welcher so groß oder größer ist als der Durchmesser des Rundringes, wobei zur Verwirklichung einer Rohr-Block-Verbindung in den Block eine aus einem Rohr und einer Hohlschraube zusammengesetzte Bewegungseinheit unter Bildung eines Ringraumes von gleichem Querschnittsprofil axial und formschlüssig einfügbar ist, und zur Verwirklichung einer Rohr-Rohr-Verbindung die Bewegungseinheit in gleicher Weise in eine Überwurfmutter eingefügt ist, wobei ein die Rohre übergreifender Ring je stirnseitig den zugehörigen Ringraum begrenzt und ein Rohr an einem den benachbarten Ringraum begrenzenden Innenflansch der Überwurfmutter mittels eines weiteren Dichtringes axial gesichert ist.

Bei einer solchen Ausbildung ist zudem eine gute Anpassung an die Dichterfordernisse durch Berücksichtigung der physikalischen Eigenschaften des Werkstoffes des Dichtringes möglich. Andererseits können Rohrenden nahezu unverändert und ohne Verletzung der Werkstoffstruktur bei relativ geringem Fertigungsaufwand in die Rohrverschraubung eingebunden werden. Außerdem liegen die baulichen Voraussetzungen für einen qualitativ besseren, insbesondere dichteren Abschluß des Ringraums im Bereich der Berührungsflächen der den Ringraum begrenzenden Teile vor. Dies gilt insbesondere bei einer weiteren Ausgestaltung entsprechend dem Patentanspruch 4; denn bei dieser kann der Armierungsring oder ein weiterer dem Armierungsring vorgeschalteter Armierungsring aus einem hochpolymeren Werkstoff bestehen, dessen Shore-Härte wesentlich höher ist als diejenige des benachbarten Dichtringes

Nachstehend wird die Erfindung anhand der Zeichnung an einigen Ausführungsbeispielen erläutert.

Es zeigen:

Fig. 1 eine Rohr-Block-Verbindung in perspektivischer Darstellung (Explosionszeichnung),

Fig. 2 eine Rohr-Rohr-Verbindung im Längsschnitt,

Fig. 3 die Rohr-Block-Verbindung gemäß Fig. 1 im Längsschnitt,

Fig. 4 einen Ausschnitt aus Fig. 3 in vergrößerter Darstellung mit zusätzlichem Armierungsring,

Fign. 5, 6 eine Variante der Rohr-Block-Verbindung gemäß Fig. 3 (in Dichtposition sowie vor Dichtposition).

Der in einem Ringraum 24 der Verschraubung angeordnete rotationssymmetrische Dichtring 11;11' ist mittels eines axial bewegbaren Rohranschlußteiles (Preßteiles) in Dichtposition überführbar. Die Preßbewegung des Preßteiles ist von der axialen Bewegungskomponente eines Gewindes der Rohrverschraubung abgeleitet. Aneinandergefügte Teile (Dichtflächenteile), die mit korrespondierenden Berührungsflächen aneinanderliegen, begrenzen mit Dichtflächen einen geschlossenen Ringraum.

Der aus einem elastischen, hochpolymerem Werkstoff bestehende und im Gefolge der Preßbewegung deformierte Dichtring liegt in Dichtposition aufgrund einer seiner axialen Stauchung entsprechenden Querdehnung annäherungsweise über seine gesamte Oberfläche mit annäherungsweise gleichem Anpreßdruck in Dichtposition an der inneren Oberfläche des Ringraumes an. Er besteht vorzugsweise aus Polyurethan oder einem Polyurethan-Kautschuk und weist eine Shorehärte im Bereich zwischen 60 und 90 auf. Der Dichtring braucht bei Lösung der Verschraubung sein Ausgangsprofil nicht wieder voll einzunehmen, da er in diesem Falle in aller Regel erneuert wird. Die Preßbewegung beinhaltet eine die beiden miteinander zu verbindenden Teile einander annähernde Relativbewegung, die in der Regel durch eine gegenseite Anlage dieser Teile aneinander beendet wird.

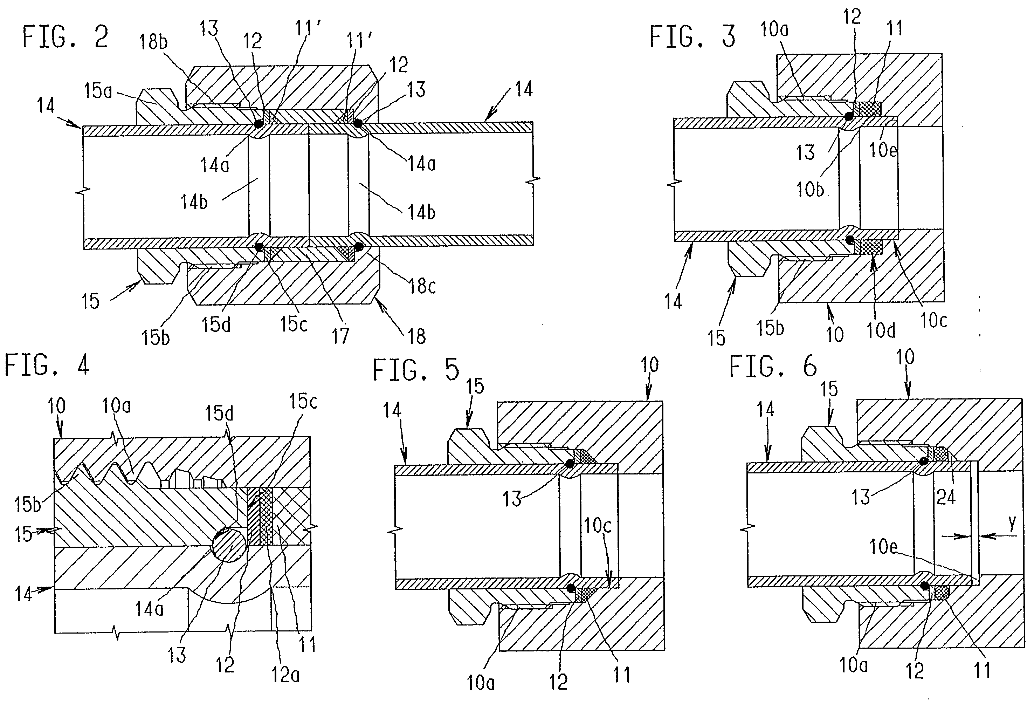

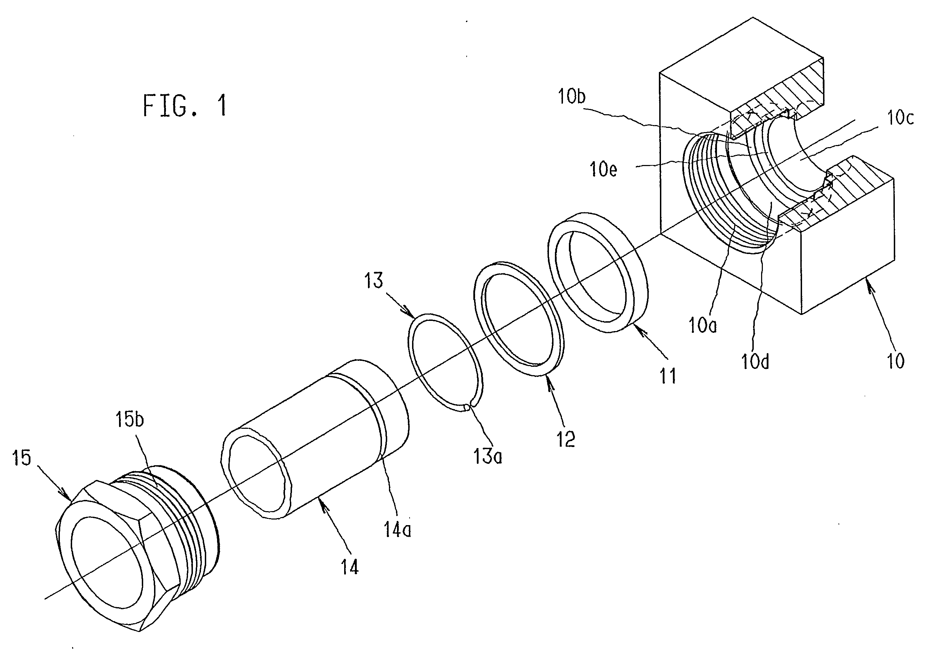

Die Figuren 3, 5 zeigen je eine Rohr-Block-Verbindung.

Das Außengewinde 15b einer Hohlschraube 15 steht mit dem Innengewinde 10a des zugehörigen Blockes 10 im Eingriff. Die Hohlschraube 15 umschließt das Rohr 14 und bildet mit diesem eine als Preßteil dienende Einheit 14, 15, die in den Block 10 axial und formschlüssig eingefügt ist. Der Dichtring 11 ist mittels der das Rohr 14 bei Preßbewegung mitführenden Hohlschraube 15 in Dichtposition überführbar. Zu diesem Zweck ist die Hohlschraube 15 mit dem Rohr 14 mittels eines gehärteten Rundringes 13 für die Preßbewegung gekuppelt. Der Rundring 13 ist etwa hälftig in eine durch Kaltverformung eingeprägten Ringnut 14a des Rohres 14 aufgenommen und liegt an der Preßkante 15c der Hohlschraube 15 im Bereich einer ringförmigen, konkaven Anlagefläche 15d an. Beim Lösen der Verbindung setzt sich die Hohlschraube 15 vom Rundring 13 axial ab. Um eine Reibungsbeanspruchung des Dichtringes 11 zu vermeiden, ist die Preßschulter der Hohlschraube 15 mit wenigstens einem Armierungsring 12 versehen, der den Ringraum axial begrenzt.

In den Figuren 5, 6 ist ein Dichtring von kreisförmigem Querschnittsprofil in einem im Querschnitt dreieckigen Ringraum 24 aufgenommen. Das Rohr 14 ist in einer zylindrischen Lagerfläche 10c des Blockes 10 aufgenommen.

Bei der Rohr-Rohr-Verbindung nach Figur 2 ist ein die Rohre 14 im Bereich der Stoßfuge teilweise axial übergreifender muffenartiger Ring 17 zwischen zwei an dessen Stirnkanten anliegenden Dichtringen 11' angeordnet. Beide Dichtringe 11' sind mittels zweier je das umschlossene Rohr 14 bei Preßbewegung axial mitführende Gewinderinge in Dichtposition überführbar. Dabei steht das Außengewinde 15b de einen als Hohlschraube 15 ausgebildeten Gewinderinges mit dem Innengewinde 18b des als Überwurfmutter 18 ausgebildeten anderen Gewinderinges im Eingriff. Die Preßschulter 15c der Hohschraube 15 und ein Innenflansch 18c der Überwurfmutter 18 liegen je über einen Armierungsring 12 am benachbarten Dichtring 11' an. Bei Preßbewegung werden die beiden Rohre 14 mit Hilfe von Rundringen 13 einander axial angenähert, bis sie an der Stoßfuge aneinander liegen und die Dichtposition erreicht ist. Die Mitnahmekupplung zwischen der Überwurfmutter 18 und dem von ihm umschlossenen Rohr 14 entspricht der Mitnahmekupplung zwischen Hohlschraube 15 und zugehörigem Rohr 14 und somit der Mitnahmekupplung der bereits beschriebenen Rohr-Block-Verbindung. Der Ring 17 ist auf den Rohren 14 axial verschieblich gelagert, so daß bei der Preßbewegung ein ständiger Druckausgleich zwischen den beiden Dichtringen 11' erfolgen kann.

Wie aus Fig. 4 ersichtlich, kann einem an der Preßschulter 15c und dem Rundring 13 anliegenden, metallenen Armierungsring 12 ein kongruenter Ring 12a aus einem hochpolymeren Werkstoff vorgeschaltet sein, dessen Shore-Härte wesentlich höher ist, als diejenige des benachbarten Dichtringes 11. Dieser Ring 12a unterliegt trotzdem unter dem Einfluß des zum Teil enormen axialen Druckes der Preßbewegung einer, wenn auch geringfügigen axialen Stauchung, die in eine Querdehnung umgesetzt wird. Dadurch ergibt sich am Umfang des Ringes 12a und an der am Rohr 14 anliegenden inneren Kante eine dichtende Anlage von hohem Anpreßdruck. Dadurch wird auch bei extrem hohen Drücken im Ringraum und bei verhältnismäßig niedriger Shore-Härte des Dichtungsringes 11 ein ‹Einwandern› von Werkstoff des Dichtringes 11 in die Fugen zwischen Ring 12a und Rohrstück 10 bzw. dem Rohr 14 zuverlässig ausgeschlossen.

**Patentansprüche**

1. Mit Hilfe von Rohranschlußteilen herstellbare Rohrverschraubung mit ausschließlicher Berührungsdichtung an ruhenden Flächen mit einer hydraulischen Leitung für ein unter Überdruck stehenden Flüssigkeit, mit wenigstens einem elastischen Dichtring (11), der in einem von einem Mantelabschnitt des Rohres und anderen Rohranschlußteilen begrenzten Ringraum der Rohrverschraubung angeordnet und mittels eines hülsenförmigen Schraubelementes (Preßteil) in Dichtposition überführbar ist, wobei das Preßteil mit dem Rohr (14) mittels eines ringförmigen Abstützteiles für die Preßbewegung zu einer Bewegungseinheit verbunden ist und die mit Berührungsflächen aneinandergefügte Teile der Rohrverschraubung einen bei beendeter Preßbewegung des Preßteiles geschlossenen Ringraum begrenzen, dessen Rauminhalt dem Volumen des aus einem elastischen, hochpolymerem Werkstoff bestehenden und durch die Preßbewegung deformierten Dichtringes (11) entspricht, der annäherungsweise über seine gesamte Oberfläche mit annäherungsweise gleichem Anpreßdruck an der inneren Oberfläche des Ringraumes (24) anliegt, dadurch gekennzeichnet, daß der Dichtring (11 bzw. 11') mittels einer das angekuppelte Rohr (14) bei Preßbewegung mitführenden Hohlschraube (15) in Dichtposition überführbar ist, wobei die Preßschulter (15c) der Hohlschraube (15) mit einem Armierungsring (12) versehen ist, der mit seinem inneren Umfang auf der Mantelfläche des Rohres (14) gelagert ist und der bei Preßbewegung mit seinem äußeren Umfang an einer zur Mantelfläche des Rohres (14) parallelen inneren Mantelfläche der Rohrverschraubung gleitbar und anliegt, und daß die Hohlschraube (15) mit dem Rohr (14) mittels eines gehärteten Rundringes (13) für die Preßbewegung zu einer Bewegungseinheit gekuppelt ist, der etwa hälftig in einer geprägten Ringnut (14a) des Rohres (14) von entsprechendem Radius aufgenommen und an der Preßkante (15c) im Bereich einer ringförmigen Anlagefläche (15d) anliegt, die sich in einem Abstand von dem Armierungsring (12) befindet, welcher so groß oder größer ist als der Durchmesser des Rundringes (13), wobei zur Verwirklichung einer Rohr-Block-Verbindung in den Block (10) eine aus einem Rohr (14) und einer Hohlschraube (15) zusammengesetzte Bewegungseinheit (14, 15) unter Bildung eines Ringraumes von gleichem Querschnittsprofil axial und formschlüssig einfügbar ist, und zur Verwirklichung einer Rohr-Rohr-Verbindung die Bewegungseinheit (14, 15) in gleicher Weise in eine Überwurfmutter (18) eingefügt ist, wobei ein die Rohre (14, 14') übergreifender Ring (17) je stirnseitig den zugehörigen Ringraum (11, 11') begrenzt und ein Rohr (14') an einem den benachbarten Ringraum begrenzenden Innenflansch (18c) der Überwurfmutter (18) mittels eines weiteren Dichtringes (13) axial gesichert ist.

2. Rohrverschraubung nach Patentanspruch 1, dadurch gekennzeichnet, daß bei der Rohr-Block-Verbindung das Außengewinde (15b) der Hohlschraube (15) mit dem Innengewinde (10a) des Blockes (10) im Eingriff steht.

3. Rohrverschraubung nach Patentanspruch 1 oder 2, dadurch gekennzeichnet, daß zur Verwirklichung einer Rohr-Rohr-Verbindung das andere Rohr (14') mitels eines Rundringes (13) axial gesichert ist, der in einer konkaven Ausdrehung des Innenflansches (18c) der Überwurfmutter (18) und in einer durch Kaltverformung erzeugten Ringnut des Rohres (14') je hälftig aufgenommen ist, wobei der Innenflansch (18c) mit einem den Ringraum begrenzenden Armierungsring (12) versehen ist, der am Rundring (13) anliegt.

4. Rohrverschraubung nach einem der vorhergehenden Patentansprüche, dadurch gekennzeichnet, daß dem Armierungsring (12) ein kongruenter Ring (12a) aus einem hochpolymeren Werkstoff vorgeschaltet ist.

5. Rohrverschraubung nach einem der Patentansprüche 1 bis 4, dadurch gekennzeichnet, daß der Rundring (13) an der Preßkante (15c) der Hohlschraube (15) im Bereich einer ringförmigen, konkaven Anlagefläche (15d) anliegt.

**Claims**

1. A pipe coupling attainable with the aid of pipecoupling members with exclusive contact seal on steady surfaces on a hydraulic pipe for a liquid under high pressure, including at least one elastic gasket (11) disposed in a gasket chamber of the pipe coupling which is limited by a surface section of the pipe and other pipe-coupling members and which is sealed by way of a sleeve-shaped screw member (thrust member), whereby the thrust member is connected with the pipe (14) by way of an annular thrust-movement-support member in order to form one combined unit of movement, and whereby the sections of the pipe coupling which are joined with abutment surfaces limit a sealed gasket chamber with the completion of thrust movement of the thrust member, its capacity corresponding with the volume of the gasket (11) of elastic, high-polymer material and deformed by the thrust movement, which gasket abuts against the inner surface of the gasket chamber (24) virtually over its entire surface at virtually even thrust pressure, characterised in that the gasket (11 or 11' respectively) is thrust into a sealing position by way of a hollow screw (15) which entrains the coupled pipe (14) during the thrust movement, whereby the thrust shoulder (15c) of the hollow screw (15) is provided with a pressure ring (12) the inner circumference of which abuts against the pipe surface (14) and which pressure ring, during the thrust movement displaceably abuts with its outer circumference against an inner surface of the pipe coupling which is parallel to the pipe surface of the pipe coupling, and in that the hollow screw (15) is coupled with the pipe (14) by way of a hardened annular ring (13) for the thrust movement to become one combined movement unit, which annular ring is with one half disposed in an annular groove (14a) of the pipe (14) of respective radius and which abuts against the thrust edge (15c) in the area of a circular abutment surface (15d) which is disposed at a distance from the pressure ring (12) which is as large or larger than the diameter of the circular ring (13) whereby in order to create a pipe-to-block coupling a displaceable unit (14, 15) comprising a pipe (14) and a hollow screw (15) can be axially and sealingly inserted into the block (10) by forming a gasket chamber of equal cross-sectional profile, and that in order to create a pipe-to-pipe coupling, said displaceable unit (14, 15) is in the same manner inserted into a coupling nut (18) whereby a ring (17) embracing the pipes (14, 14') limits the respective gasket chamber (11, 11') face-sidedly, and whereby a pipe (14') is axially secured against an inner flange (18c) of the coupling nut (18) which flange limits the adjacent gasket chamber by way of a further gasket (13).

2. Pipe coupling according to patent claim 1, characterised in that with the pipe-to-block coupling the external thread (15b) of the hollow screw (15) engages the internal thread (10a) of the block (10).

3. Pipe coupling according to patent claim 1 or 2, characterised in that to create a pipe-to-pipe coupling the other pipe (14') is axially secured by way of a circular ring (13) which is accommodated with one half each in a concave turn of the inner flange (18c) of the coupling nut (18) and in a cold-formed circular groove of the pipe (14') whereby the inner flange (18c) is provided with a pressure ring (12) which limits the gasket chamber and which ring abuts against the circular ring (13).

4. Pipe coupling according to one of the previous patent claims, characterised in that the pressure ring (12) is preceded by a congruent ring (12a) of high-polymer material.

5. Pipe coupling according to one of the patent claims 1 to 4, characterised in that the circular ring (13) abuts against the pressure edge (15c) of the hollow screw (15) in the area of a ringshaped, concave abutment surface (15d).

## Revendications

1. Raccord fileté pour tubes pouvant être réalisé à l'aide de pièces de raccordement de tubes et comprenant exclusivement une étanchéité par contact sur des surfaces au repos d'une conduite hydraulique destinée à un fluide sous pression, comprenant au moins un joint d'étanchéité annulaire élastique (11) qui est disposé dans un espace annulaire du raccord fileté pour tubes délimité par une portion de la surface extérieure du tube et par d'autres pièces de raccordement de tubes, et que l'on peut faire passer en position d'étanchéité au moyen d'un élément vissible en forme de manchon (pièce de pressage), cependant que la pièce de pressage est reliée au tube (14) au moyen d'une pièce d'appui annulaire destinée au déplacement de pressage en formant un ensemble de déplacement, et que les pièces du raccord fileté pour tubes qui sont en aboutement par des surfaces de contact délimitent un espace annulaire qui est fermé lorsque le déplacement de pressage de la pièce de pressage est terminé et dont la capacité correspond au volume du joint d'étanchéité annulaire (11) déformé par le déplacement de pressage et composé d'une matière élastique en haut polymère qui repose sur la surface intérieure de l'espace annulaire (24) avec une pression de serrage approximativement égale sur à peu près l'ensemble de sa surface, caractérisé par le fait que le joint d'étanchéité annulaire (11, respectivement 11') peut être amené en position d'étanchéité au moyen d'une vis creuse (15) qui entraîne le tube accouplé (14) lors du déplacement de pressage, cependant que l'épaulement de pressage (15c) de la vis creuse (15) est muni d'une bague d'armature (12) qui est passée par son pourtour intérieur sur la surface extérieure du tube (14) et qui, lors du déplacement de pressage, repose en pouvant glisser par son pourtour extérieur sur une surface intérieure du raccord fileté pour tubes parallèle à la surface extérieure du tube (14), et par le fait que la vis creuse (15) est accouplée au tube (14) au moyen d'une bague torique durcie (13) pour former, en vue du déplacement de pressage, un ensemble de pressage dont une moitié environ est logée dans une rainure annulaire (14a) de rayon correspondant empreinte dans le tube (14), et qui repose sur le bord de pressage (15c) dans la région d'une surface d'appui annulaire (15d) située à une distance de la bague d'armature (12) qui est égale ou supérieure au diamètre de la bague torique (13), cependant que, pour réaliser une liaison tube-bloc, un ensemble de déplacement (14, 15) composé d'un tube (14) et d'une vis creuse (15) peut être introduit axialement dans le bloc (10) avec conjugaison des formes en formant un espace annulaire présentant la même section transversale, et que, pour réaliser une liaison tube-tube, l'ensemble de déplacement (14, 15) est introduit de la même manière dans un écrou-chapeau (18), une bague (17) qui recouvre les tubes (14, 14') limitant à chaque fois l'espace annulaire correspondant (11, 11') du côté frontal, et un tube (14') étant bloqué axialement au moyen d'un autre joint d'étanchéité annulaire (13) sur une bride intérieure (18c) de l'écrou-chapeau (18) qui délimite l'espace annulaire voisin.

2. Raccord fileté pour tubes selon la revendication 1, caractérisé par le fait que, dans le cas de la liaison tube-bloc, le filetage extérieur (15b) de la vis creuse (15) est en prise avec le filetage intérieur (10a) du bloc (10).

3. Raccord fileté pour tubes selon la revendication 1 ou 2, caractérisé par le fait que, pour réaliser une liaison tube-tube, l'autre tube (14') est bloqué axialement au moyen d'une bague torique (13) qui est logée, par moitié à chaque fois, dans un évidement concave ménagé par tournage dans la bride intérieure (18c) de l'écrou-chapeau (18) et dans une rainure annulaire du tube (14') produite par déformation à froid, la bride annulaire (18c) étant munie d'une bague d'armature (12) qui délimite l'espace annulaire et qui repose sur la bague torique (13).

4. Raccord fileté pour tubes selon l'une des revendications précédentes, caractérisé par le fait que la bague d'armature (12) est précédée par une bague de même forme (12a) en une matière composée d'un haut polymère.

5. Raccord fileté pour tubes selon l'une des revendications 1 à 4, caractérisé par le fait que la bague torique (13) repose sur le bord de pressage (15c) de la vis creuse (15) dans la région d'une surface d'appui concave et annulaire (15d).

FIG. 2

FIG. 3

FIG. 4

FIG. 5

FIG. 6

EP 0 163 252 B1

FIG. 1

9